# EUROPEAN PATENT APPLICATION

(11) **EP 2 946 656 A1**
(43) Date of publication of application: **25.11.2015**
(21) Application number: 15168082.4
(22) Date of filing: 19.05.2015
(51) Int. Cl.: A01G 25/16

(54) **HYBRID ELECTRONIC CONTROL UNIT FOR WATERING PLANTS**

(30) Priority: 21.05.2014 IT MI20140925
(71) Applicant: CLABER S.P.A., 33080 Fiume Veneto (PN) (IT)
(72) Inventor: Brundisini, Andrea, 33080 San Quirino (PN) (IT); De Biasi, Roberto, 33170 Pordenone (IT); Chiarot, Maurizio, 30020 Cinto Caomaggiore (VE) (IT)
(74) Representative: Mittler, Enrico

(57) **Abstract**

A hybrid electronic control unit for watering plants is described, which comprises a microcontroller (15) for controlling the control unit, a display (4) for visualizing the state of the control unit and a power supply system comprising an electric battery (14) and a photovoltaic panel (3). The battery (14) is used to start the microcontroller (15) for initially starting the control unit, for initially charging a high capacity condenser (SC), for charging said high capacity condenser (SC) in case of prolonged periods of low light intensity, and for supplying energy in case of currents of the order of tenths of milliamperes, and the photovoltaic panel (3) is intended to recharge the high capacity condenser (SC) for subsequently supplying energy to the microcontroller (15).

## Description

The present invention relates to a control unit for watering plants which includes the use of a photovoltaic panel in combination with an electric battery.

"Solar" watering control units are known, i.e. with a photovoltaic panel for recharging an internal rechargeable battery, i.e. of the NiCd (nickel cadmium) type or of the more recent NiMh (nickel-metal hydride) or Li-ion (lithium-ion) type.

A problem of such control units is related to the size of the photovoltaic panel, which must be contained, in particular in the case of control units for taps or the like, to allow the panel of the control unit to be easily integrated in the mechanical structure.

This condition, i.e. the possibility of using a limited area for the photovoltaic panel, implies the drawback that at the absolute initial lighting and at all yearly restarts of the control unit and the respective plant, the control unit must be exposed to sunlight for one or more days before it has sufficient energy to start.

Furthermore, a rechargeable custom battery, which can be purchased only by the control unit manufacturer, is used in the known "solar" control units in order to ensure good operation.

US 5 229 649 A discloses a light-energized electronics energy management system which includes the features recited in the preamble of claim 1.

In view of this prior art, it is the object of the present invention to provide a hybrid control unit with photovoltaic panel and rechargeable battery which allows the following results to be achieved:
a) having a small-sized photovoltaic panel;
b) overcoming the drawback related to the initial lighting;
c) causing the control unit to operate in poor visibility conditions;
d) minimizing the use of batteries to reduce the environmental impact, by using a single AA alkaline battery and by extending the battery life so that energy is taken from the photovoltaic panel and not from the battery itself as much as possible.

A hybrid electronic control unit for watering plants is thus provided as defined in claim 1.

The claimed invention comprises a microcontroller and a display powered by a photovoltaic panel and by an electrical battery, characterized in that it comprises a high capacity condenser, of the type known as "supercap" or "ultracap", which has the following properties:
a) a greatly shorter charging and discharging time than that of rechargeable batteries;
b) a lifespan of up to 20 years, practically independent from the number of charging and discharging cycles;
c) a charging capacity about 100 times lower than that of a battery of equivalent volume.

In the control unit according to the invention, the battery is used to start the control unit rapidly and to support requests of extra energy, such as for backlighting the display.

The "supercap" or "ultracap" condenser is used to accumulate as much energy as possible from the photovoltaic panel rapidly, because of its capability of being quickly charged and because its charging capacity is much lower than that of a battery typically used for this type of application, and thus takes much less time to charge.

Moreover, the "supercap" or "ultracap" condenser is used to minimize the possible use of energy from the battery. Such a condenser is normally charged by the photovoltaic panel and only exceptionally, like at the initial lighting of the control unit or after extended levels of low sunlight intensity, is charged by the battery. This results in extending the battery life to the natural expiration of the battery itself.

The features of the present invention will be explained in the following detailed description of a practical embodiment thereof, shown by way of non-limitative example in the accompanying drawings, in which:
figure 1 shows a front view of a one-way hybrid control unit according to the invention;
figure 2 shows the approximate diagram of the energy management circuit of the control unit in figure 1;

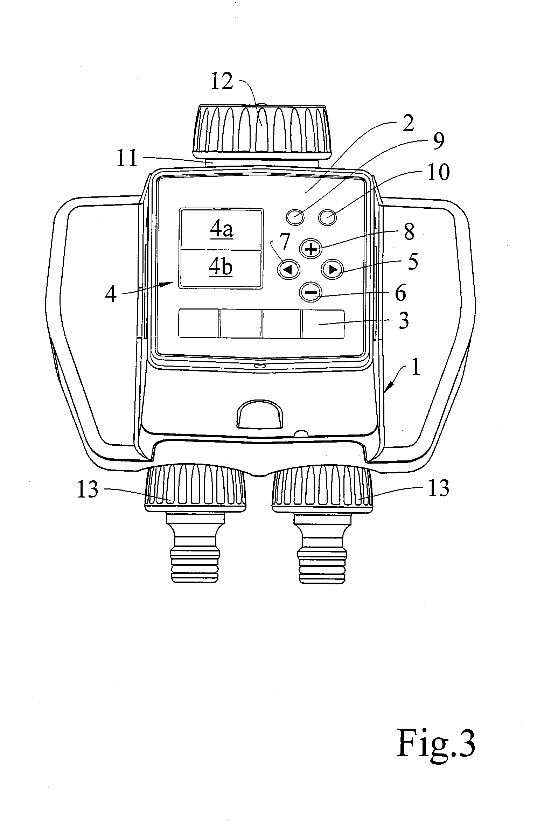

figure 3 shows a front view of a two-way variant of the hybrid control unit in figure 1.

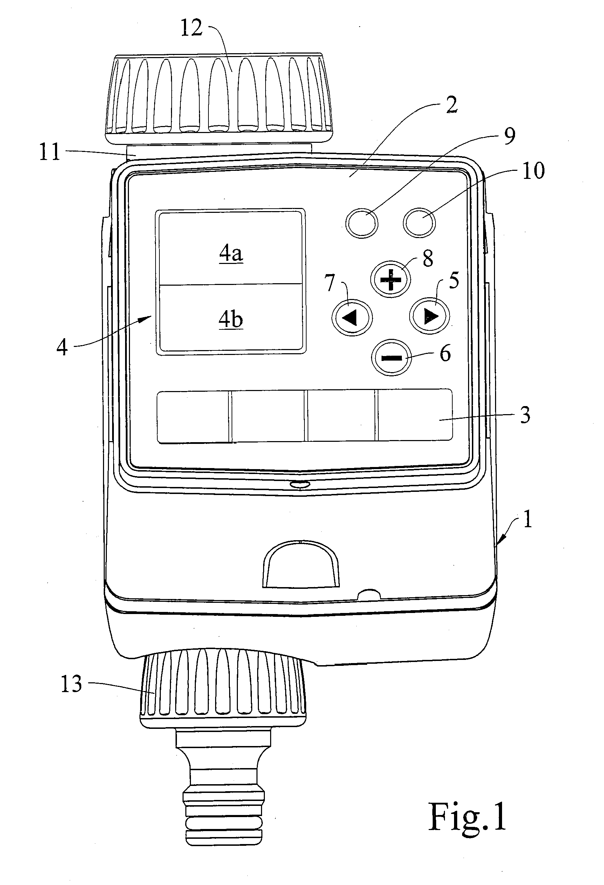

The hybrid control unit in figure 1 comprises a box-like body 1, which encloses a solenoid valve (not shown), an electric battery (also not shown) and the electric management and control circuit of the control unit itself.

The box-like body 1 has a front 2 comprising a photovoltaic panel 3, a liquid crystal display 4 divided into two overlapping parts 4a and 4b, the first intended to indicate the current time and day, and the second to indicate the start time and day of a watering program and the duration of the program itself. Four buttons 5-8 are provided for setting and programming the control unit, other two buttons 9-10 are provided for choosing between programming and manual operation.

On the top of the box-like body 1 there is a water inlet mouth 11 with a sleeve 12 for fixing to a threaded tap, while on the bottom, in axis with the inlet mouth 11, there is an exit way of the water itself, represented by a fitting 13 applied thereto.

The solenoid valve provided inside the box-like body 1 opens or closes the communication between the inlet mouth 11 and the outlet mouth with fitting 13, as provided in several examples of the prior art.

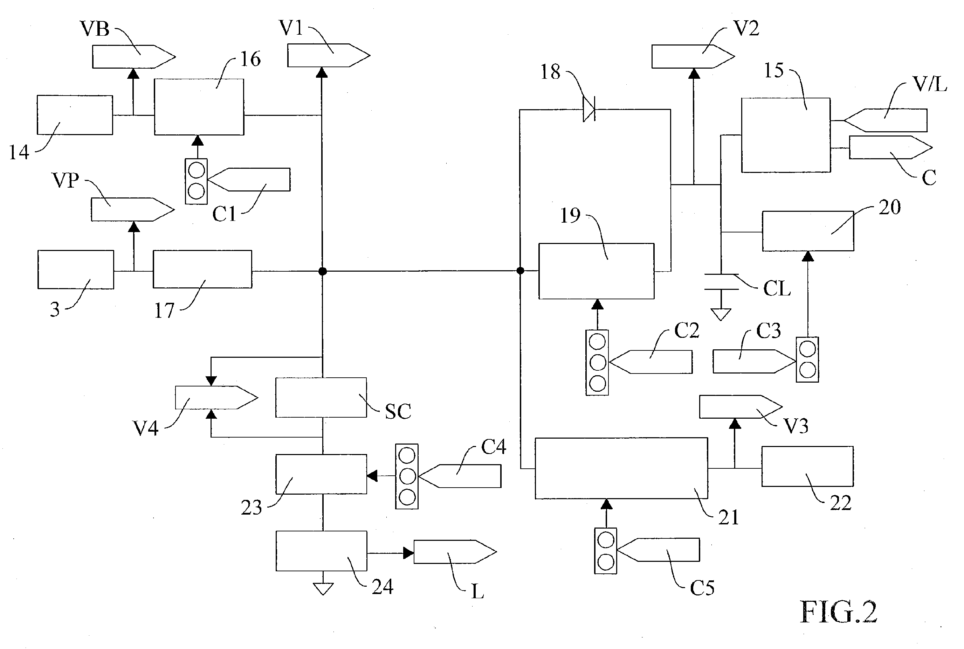

The internal circuit of the control unit comprises an energy management circuit like that shown in figure 2, which includes the photovoltaic panel 3, a battery 14, a microcontroller 15 and a high capacity condenser SC (of the type known as "supercap" or "ultracap").

Battery 14 is a simple AA alkaline battery with input voltage VB to a step-up regulator 16, which is controlled by a command C1 so as to be automatically enabled when the control unit starts without being controlled by microcontroller 15 and to be deactivated by the microcontroller itself. The voltage VP of the photovoltaic panel is regulated, in turn, by a regulator 17.

An input voltage V1 is present downstream of the regulators 16 and 17, which is provided as power voltage V2 at the input of the microcontroller 15 either by means of a bypass diode 18 or by means of a step-up regulator 19, which is controlled by a command C2 so as to be either enabled by microcontroller 15 or automatically deactivated or controlled in a pulse mode by microcontroller 15 in order to limit the current needed for the regulation.

Voltage V2 is also supplied to a backlight circuit 20 of display 4, which is controlled by a control C3 of microcontroller 15 so as to be enabled or automatically disabled.

A limiting condenser CL is interposed between the common inputs of microcontroller 15 and of the backlight circuit 20 and ground.

A step-up regulator 21 is also supplied with voltage V2 and is controlled by a command C5 coming from microcontroller 15 so as to be enabled by microcontroller 15 for the opening and closing cycle of the solenoid valve and is automatically switched off. V3 is the supply voltage of a control circuit 22 of the solenoid valve.

The input voltage V1 is also supplied to the high capacity condenser SC at the terminals of which a variable voltage V4 is present and with which a control circuit 23 is associated being controlled by an enabling command C4 of microcontroller 15 so as to be enabled by microcontroller 15 or automatically disabled or linearly controlled by microcontroller 15 to limit the charging current of condenser SC so as not to exceed the maximum current which can be provided by the regulator 16 of battery 14.

A current sensor 24 interposed between the control circuit 23 and ground communicates the instantaneous charging current of condenser SC to the microcontroller 15, by means of a signal L.

The various commands emitted by microcontroller 15 are generally indicated as microcontroller output commands C.

The various voltage values read by microcontroller 15 are generally indicated as microcontroller input readings V, to which the reading of current L is added.

The control unit can thus work as follows.

Once the control unit has been installed, battery 14 which has been inserted into the specific housing provided in the control unit produces, under the control of regulator 16, the inlet voltage V1 which, through the bypass diode 18, originates the input voltage V2 for microcontroller 15, thus determining the start of microcontroller 15.

Once supplied, microcontroller 15 takes control of the energy management and in the presence of battery 14 immediately lights the control unit and manages the energy accumulation and distribution.

Firstly, microcontroller 15 ensures the charging of battery 14, as rapidly as possible, of the high capacity condenser SC. It does this by virtue of the charge current being controlled by the current sensor 24 and by the commands C1 and C4.

Once the high capacity condenser SC is charged, microcontroller 15 will switch off the step-up regulator 16 and the system will use the battery voltage 14 for the shortest time possible. This is obtained by sizing the condenser SC and the charging circuit from the photovoltaic panel 3 so that the energy consumption of at least three working days of the control unit is lower than the average energy which can be accumulated from the photovoltaic energy in one day. As a result, even on low light intensity days caused by overcast skies, energy is not taken from battery 14 but the energy accumulated in the high capacity condenser SC is used for as long as possible.

It is worth noting the function performed by command C2 when it is controlled in a pulse mode by microcontroller 15.

When the input voltage V1 is such to ensure that the voltage on microcontroller 15 is sufficient for the microcontroller itself to be correctly supplied, regulator 19 is automatically off and the microcontroller is supplied by means of the bypass diode 18. This ensures that, when started, microcontroller 15 can be supplied without any control.

When by reading the value of voltage V1, microcontroller 15 sees that the input voltage V1 has dropped under a safety threshold, the microcontroller, by means of command C2, enables regulator 19 which charges the limiting condenser CL to a voltage higher than V1. Microcontroller 15 enables regulator 19 when the voltage at the terminals CL has reached a prefixed voltage value.

This procedure is continuously repeated until voltage V1 reaches a value such to ensure that the supply voltage V2 of microcontroller 15 is sufficient again for the microcontroller itself to be correctly supplied by means of the bypass diode 18, or until voltage V1 drops under a value so that regulator 19 can no longer operate correctly.

Since regulator 19 consumes current if enabled, this technique allows regulator 19 to be enabled for a "ton" time considerably shorter than the "toff" discharge time of the limiting condenser CL. Therefore, the consumption of regulator 19 is reduced because regulator 19 is enabled only for a "ton" time with respect to the total "ton + toff".

When a current of the order of tens of mA is required, e.g. when the backlight circuit 20 of display 4 is lit, the above-described procedure is no longer advantageous, because condenser CL would be discharged in a "toff" time considerably lower than "ton", with currents of this extent, thus canceling the effect of this technique.

Therefore, during all the lighting time of the backlighting of display 4, for example, regulator 19 is always kept enabled.

Moreover, for the entire duration of the lighting of the backlighting 20 of display 4, the necessary energy is not taken from the high capacity condenser SC but directly from battery 14. This is obtained by interrupting the circuit to ground of condenser SC by means of command C4, so that condenser SC cannot be discharged and by switching on the step-up regulator 16 by means of command C1. At the end of the lighting period of backlighting 20, the step-up regulator 16 is switched off by means of command C1, and condenser SC is connected to ground by means of command C4. In order to prevent the lighting time of backlighting 20 from being undefined or excessive, such a duration is timed by microcontroller 15 which will switch off the backlighting 20 after a preset time, typically from 10 to 15 seconds, since the last pressing of any button. This technique ensures that asynchronous operations, such as those related to the intervention by an operator, who, by pressing any button, makes microcontroller 15 light the backlighting 20, cannot discharge the high capacity condenser SC. Once the request for high current has been ended, the high capacity condenser SC may continue to perform its task of supplying the main functions of the control unit, i.e. the watering functions.

The energy management circuit described above with reference to figure 2, based on the use of a lighting battery and a photovoltaic panel which charges a high capacity condenser controlled by a microcontroller, can be used in other programmable control units, in particular in control units with two or more water outlet ways with respective fittings 13. In this case, the functions of the buttons 9 and 10 change and they may become buttons for selecting the programmed activation of either outlet way.

## Claims

1. Hybrid electronic control unit for watering plants, comprising a microcontroller (15) for the control of the control unit, a display (4) per visualizing the state of the control unit and a power supply system comprising an electric battery (14) and a photovoltaic panel (3), wherein the battery (14) is destined for the start of the microcontroller (15) for the start of the control unit, for the initial charge of a high capacity condenser (SC), for the charge of said high capacity condenser (SC) in case of prolonged periods of low light intensity and for supply of energy in case of currents of the order of tenths of milliampere, and the photovoltaic panel (3) is destined for the recharge of the high capacity condenser (SC) for the subsequent supply of energy to the microcontroller (15), **characterized by** comprising a control circuit (23) for controlling the charge current of the high capacity condenser (SC), which control circuit is in turn controlled by a command (C4) of the microcontroller (15) for limiting the charge current of the high capacity condenser (SC) so that the charge current of the high capacity condenser (SC), detected by a current sensor (24), does not become higher than the maximum charge current that the battery (14) is able to supply.

2. Hybrid electronic control unit according to claim 1, **characterized by** comprising a regulator (16) of the voltage supplied by the battery (14) and a regulator (17) of the voltage supplied by the photovoltaic panel (3), said regulators (16, 17) defining the value of an input voltage (VI) which supplies the microcontroller (15) and the high capacity condenser (SC).

3. Hybrid electronic control unit according to claim 2, **characterized in that** said regulator (16) of the battery voltage is controlled by a command (C1) of the microcontroller (15) so as to be automatically enabled at the start of the control unit and in absence of any control of the microcontroller (15) and to be then disabled by the microcontroller (15).

4. Hybrid electronic control unit according to claim 3, **characterized in that** said input voltage (V1) is provided as supply voltage (V2) of the microcontroller (15) either through a bypass diode (18) or through a regulator (19) of voltage of the microcontroller (15), arranged in parallel with one another, said regulator (19) of voltage of the microcontroller (15) being controlled by a command (C2) of the microcontroller (15) so as to be enabled by the microcontroller (15) at the start of the latter, automatically disabled by the same microcontroller (15) when the input voltage (VI) is such as to guaranty the correct supply of the microcontroller (15) or to be pulse controlled by the microcontroller (15) to limit the current necessary for regulation.

5. Hybrid electronic control unit according to claim 4, **characterized in that** in order to limit the current necessary for regulation a limiting condenser (CL) is arranged between the input of the microcontroller (15) and ground, there being provided a current limiting procedure according to which said voltage regulator (19) of the microcontroller (15) is enabled to charge to a prefixed voltage higher than said input voltage (V1) when said input voltage (VI) goes down under a safety threshold and is then disabled when said prefixed voltage is reached, said procedure being repeated continuously until the input voltage (VI) reaches again such a value as to guaranty that the supply voltage of the microcontroller (15) is sufficient for correct supply of the microcontroller (15) through the bypass diode (18).

6. Hybrid electronic control unit according to claim 4, **characterized by** comprising a backlight circuit (20) of the display (4) arranged in parallel with the microcontroller (15).
